# EUROPEAN PATENT APPLICATION

(11) **EP 4 631 896 A1**
(43) Date of publication of application: **15.10.2025**
(21) Application number: 24168973.6
(22) Date of filing: 08.04.2024
(51) Int. Cl.: B65G 54/02, G05B 19/418

(54) **COMPUTER-IMPLEMENTED DEVICE, COMPUTER-IMPLEMENTED METHOD, AND COMPUTER PROGRAM PRODUCT FOR OPTIMIZING A CLOSED-LOOP TRANSPORTATION SYSTEM**

(71) Applicant: Siemens Aktiengesellschaft, 80333 München (DE)
(72) Inventor: Menges, Adrian, 66292 Riegelsberg (DE); Gierden, Marco, 91097 Oberreichenbach (DE)
(74) Representative: Siemens Patent Attorneys

(57) **Abstract**

The invention relates to a computer-implemented device for optimizing a closed-loop transportation system (100), the closed-loop transportation system (100) comprising a linear transport system (110), including a first end (A) and a second end (B) as well as a belt system (130) arranged to form a closed-loop between the first end (A) and the second end (B) of the linear transport system(110), wherein the computer-implemented device comprises a receiving unit for receiving a number N, with N ≥ 1, of status signals indicative of an operation state of the closed-loop transportation system (100), a calculating unit using at least one algorithmic procedure, said at least one algorithmic procedure being configured to provide at least one output signal for optimizing the closed-loop transportation system (100) using the number N of status signals as input and a controlling unit for controlling the closed-loop transportation system (100) using the provided at least one output signal.

## Description

The present invention relates to a computer-implemented device for optimizing a closed-loop transportation system, the closed-loop transportation system comprising a linear transport system and a belt system. Moreover, the present invention relates to a system comprising a closed-loop transportation system and a computer-implemented device, to a computer-implemented method for optimizing a closed-loop transportation system and to a computer program product for optimizing a closed-loop transportation system.

Linear and planar motor transportation systems are widely known and appreciated as a configurable transportation concept for contemporary production facilities. A modern linear transport system is based on the arrangement of one or more individually and subsequently arranged segments wherein each segment forms a respective magnetic linear motor. Said linear motor is typically made from a stator part, implemented as a linear rail that contains electric windings configured to exhibit a magnetic field when energized and a rotor part, which may be implemented as a magnetic plate (referred to herein as a carrier) arranged on the stator part. When the linear motor is energized, a moving magnetic field is generated along the longitudinal extension of the stationary part of the linear motor that acts as a propulsion for driving the carrier.

These linear motor arrangements are commonly used in production chains that require a product to go through different fabrication processes (so-called processing stations) such as drilling, cutting, assembling, etc. The main advantages of these systems lie in their high positioning accuracy of the carriers, the active positioning of the carriers, and the possibility to interact with the processing stations. Moreover, the carriers may be moved to certain positions in a production line and may be configured to reside at a respective position for a configurable time period to allow the execution of a corresponding processing step.

In some application scenarios, it may be required to transport a certain good on a carrier along subsequently arranged processing stations of a processing chain by means of the linear transport system and to return a carrier, for subsequent use, from a final processing station back to the first processing station of the processing chain and thus to the beginning of the linear transport system. For the return of the carriers, a conveyor belt or a tooth belt may be used in combination with a linear transport system to provide a closed-loop transportation system. Such a combination of a linear transport system and a belt system is required to avoid congestion situations in the production chain and to prevent traffic jams therein, e.g., if multiple carriers accumulate at the end of the production chain on the linear transport system and are not moved onwards (e.g., returned to the beginning of the production chain) any further. A combined arrangement of a linear transport system and such a belt system is referred to as an ovalmover or a closed-loop transportation system.

Since an ovalmover may be provided with different number of carriers depending on the respective application scenario the ovalmover is used for, the number of carriers on the ovalmover may have a significant impact on the throughout and performance of an ovalmover. Generally, a larger number of carriers in an ovalmover may support an increased throughput and thus an increased performance of an ovalmover. However, providing an ovalmover with a larger number of carriers may rise the implementation costs for an ovalmover such that a large number of carriers tends to be avoided without an ultimate necessity. Moreover, a large number of carriers in an ovalmover may further lead to congestion effects which may disadvantageously affect the throughput and performance of an ovalmover.

The throughput and performance of an ovalmover may additionally be affected by an operation speed of the belt of the belt system that contributes to forming a closed-loop transportation system. Generally, a higher operation speed of the belt may be associated with a faster return of a carrier from an endpoint of the linear transport system to a start point of the linear transport system which may advantageously support a higher throughout and performance of an ovalmover. Moreover, a higher operation speed of the belt may also at least partially compensate for a limited number of carriers. However, a higher operation speed of the belt may lead to increased energy costs. That may increase the manufacturing costs for goods produced based at least in part on the usage of respective ovalmovers. Moreover, a higher operation speed of the belt may also cause higher attrition effects which may additionally rise the overall maintenance costs for an ovalmover.

Therefore, the number of carriers in an ovalmover and/or the operation speed of the belt may be seen as parameters that are crucial to the performance of an ovalmover. However, the number of carriers and/or the operation speed of the belt of an ovalmover is currently mainly determined based on a manual trial and error approach during which an operator of an ovalmover may test the maximum achievable throughput of an ovalmover by providing the ovalmover with a certain number of carriers and/or by setting the operation speed of the belt of an ovalmover to a certain speed. This may be seen as time consuming and may require the active attention of a human operator. Consequently, a respective characterization of an ovalmover may be seen as cumbersome and cost-intensive.

Moreover, since closed-loop transportation systems, and in particular their carriers, tend to be cost-intensive, it may be seen desirable to estimate a maximum achievable throughput/performance (e.g., for a certain number of carriers) of a closed-loop transportation system prior to buying and/or setting up a closed-loop transportation system.

However, current methods for planning and characterizing a closed-loop transportation system are not capable of fulfilling the aforementioned needs in a satisfying manner.

Therefore, there is an object to improve the optimization of an ovalmover.

According to a first aspect, a computer-implemented device for optimizing a closed-loop transportation system is suggested. The closed-loop transportation system comprises a linear transport system including a first end and a second end and a belt system arranged to form a closed-loop between the first end and the second end of the linear transport system. The computer-implemented device comprises a receiving unit for receiving a number N, with N ≥ 1, of status signals indicative of an operation state of the closed-loop transportation system and a calculating unit using at least one algorithmic procedure, said at least one algorithmic procedure being configured to provide at least one output signal for optimizing the closed-loop transportation system using the number N of status signals as input. Moreover, the computer-implemented device comprises a controlling unit for controlling the closed-loop transportation system using the provided at least one output signal.

Based on the algorithmic procedure and the number N of status signals, a determination of an optimized at least one output signal may advantageously be provided. That is, respective settings of the closed-loop transportation system that may be associated with the at least one output signal may at least in part be determined without the need for physically implementing a closed-loop transportation system, i.e., a physically built closed-loop transportation system that may be set up as part of a production line. This may generally support a faster determination of the desired at least one output signal as the at least one output signal may at least in part be determined based on a computational-efficient algorithmic procedure which may provide the at least one output signal faster as compared to a trial-and-error approach which at least partially relies on the physical implementation of a closed-loop transportation system. This may decrease the time effort and costs associated with the determining of the optimized at least one output signal. Since no physically implemented closed-loop transportation system may be required to the determine the at least one output signal, opportunity costs which may arise from blocking a physically implemented closed-loop transportation system may efficiently be minimized.

Moreover, the algorithmic procedure may support a prediction of an optimized at least one output signal and an associated maximum achievable throughput of the closed-loop transportation system prior to buying/building a respective closed-loop transportation system. This may support a cost-efficient and tailored planning of a closed-loop transportation system to be deployed in a production facility.

According to an embodiment, the linear transport system may further comprise a number of carriers movable between the first end and the second end of the linear transport system. The belt system may further be configured to receive at least one carrier from the linear transport system at the second end and to return the at least one carrier to the linear transport system at the first end.

Based at least in part thereon, a closed-loop transportation system may be provided in which a monodirectional movement of at least one carrier on the linear transport system may be facilitated which carrier, when arriving at the second end of the linear transport system, may be returned to the first end of the linear transport system by means of the belt system. This may ensure that a sufficient number of carriers may be provided at the first end of the linear transport system without causing a congestion of carriers at the second end of the linear transport system.

In some examples, the linear transport system may be provided with a single carrier. In other examples, the linear transport system may be provided with more than one carrier such as, e.g., two carriers, three carriers, four carriers, five carriers, six carriers, seven carriers, eight carriers, nine carriers or ten carriers. In some examples, the linear transport system may be provided with more than ten carriers.

In some examples, the linear transport system may comprise one or more segments, wherein each segment may represent a linear motor or a part of a linear motor (i.e., the totality of the subsequent arrangement of segments may made up the linear motor).

According to a further embodiment, the receiving unit may be configured to receive the number N of status signals including a number of carriers in the closed-loop transportation system, an operation speed of the belt system of the closed-loop transportation system, a throughput of carriers in the closed-loop transportation system and/or a processing time of a carrier at a certain process position on the linear transport system.

An operation speed of the belt may be referred to as the speed at which a carrier on a belt of the belt system may be moved forward along a longitudinal direction of the belt system. The operation speed of the belt may be expressed in mm/s, cm/s or m/s.

A throughput of the closed-loop transportation system may be referred to as the number of carriers that passes, e.g., the first or the second end of the linear transport system in a predefined time interval (e.g., per second, per minute, per hour and/or per day).

A processing time of a carrier at a certain process position may be understood as the time a carrier may have to stop at a certain position on the linear transport system for a processing step to be executed on the product transported on the respective carrier. The respective carriers may be operated in a stop-and-go-manner (e.g., when drilling a hole into a product to be manufactured). Additionally or alternatively, the respective carriers may undergo a translational movement along the linear transport system (e.g., at a speed that is lower than a speed of the carrier when not being in a process position, e.g., if a line of glue is to be applied to the product to be manufactured). Alternatively, the respective carriers may always move at a constant speed on the linear transport system, irrespective of the aspect whether they are at a certain process position or not.

According to a further embodiment, the receiving unit may further be configured to receive at least one threshold signal indicative of an interval within which the at least one output signal is allowed to vary.

The threshold signal may, e.g., indicate that only a maximum number of 5, 10, 15, 20 or 25 (or more) carriers is to be allowed in the closed-loop transportation system. Additionally or alternatively, the threshold signal may indicate a minimum number of carriers in the closed-loop transportation system. That is, the threshold signal may, e.g., indicate that at least 2, 5, 10 or more carriers are required in the closed-loop transportation system.

Additionally or alternatively, the threshold signal may indicate a minimum operation speed of the belt, such as, e.g., 100 mm/s. Additionally or alternatively, the threshold signal may indicate a maximum operation speed of the belt, such as, e.g., 1500 mm/s.

This may ensure, that the algorithmic procedure may only consider those values for the at least one output signal which may be seen as technically useful and beneficial for the production line in which the closed-loop transportation system is used. Therefore, the computation time for providing the at least one output signal may efficiently be utilized.

According to a further embodiment, the number N of status signals may comprise a number K, with K ≤ N, of hypothetic status signals of the closed-loop transportation system and a number L, with L = N-K, of current real world status signals of the closed-loop transportation system.

A hypothetic status signal may be referred to as a status signal that corresponds to a status signal of a closed-loop transportation system that has not been physically implemented but may potentially be a status signal of particular interest for a closed-loop transportation system that is yet to be implemented.

A current real world status signal may be referred to as a status signal that corresponds to a status signal of a physically implemented closed-loop transportation system such as, e.g., a status signal that may characterize a previous operation state of the closed-loop transportation system (e.g., a previous operation speed of the belt and/or a previous number of carriers in the closed-loop transportation system).

By basing the at least one status signal at least partially on hypothetic status signal, the at least one output signal may be determined without the necessity for physically implementing a closed-loop transportation system. Consequently, a potential behavior of a closed-loop transportation system may be characterized prior to its physical implementation. This may generally decrease the planning and implementation costs of a closed-loop transportation system.

According to a further embodiment, the at least one output signal provided by the algorithmic procedure may be indicative of an optimized operation speed of the belt system and/or an optimized number of carriers to be used in the closed-loop transportation system.

Thus, the number of carriers in the closed-loop transportation system may be set to an optimum that allows a maximized throughput such that unnecessary high implementation costs arising from the carriers may be reduced. Additionally or alternatively, the implementation costs of a closed-loop transportation system may efficiently be reduced as undue energy costs that may arise from an unnecessarily high operation speed of the belt may be decreased.

According to a further embodiment, the at least one output signal may include an optimized operation speed of the belt system. The controlling unit may be configured to set the operation speed of the belt system to the optimized operation speed and/or the controlling unit may be configured to provide an operator of the closed-loop transportation system with the at least one output signal for a manual control of the closed-loop transportation system based on the at least one output signal.

The controlling unit may be configured to provide the at least one output signal to the operator of the closed-loop transportation system by displaying the at least one output signal on a screen. The at least one output signal may be displayed on the screen by means of a user interface. In some examples, the operator may confirm, by means of the user interface, that the closed-loop transportation system shall be set to the at least one output signal based on which the controlling unit may set the closed-loop transportation system to the respective at least one output signal. Alternatively, the operator may manually set the at least one transportation system to the at least one output signal. Additionally or alternatively, the at least one output signal may be saved to a log-file for subsequent use.

Configuring the controlling unit to set the closed-loop transportation system may facilitate an efficient controlling of the closed-loop transportation system at an optimized state with minimized requirements for external input, e.g., by the operator.

According to a further embodiment, the at least one algorithmic procedure may be configured to determine a carrier throughput in the closed-loop transportation system as part of a simulation of the operation of the closed-loop transportation system that is operated based on the number N of status signals.

A simulation may be referred to as a virtual model of a closed-loop transportation system. The simulation may be configured to act as a physically implemented closed-loop transportation system and may react identical (within manufacturing tolerances) to the number N of status signals as compared to a physically implemented closed-loop transportation system. The virtual model of the closed-loop transportation system may, e.g., consider mechanical friction effects, aging, etc. as it may occur in a physically implemented closed-loop transportation system.

Therefore, an efficient characterization of the behavior of a closed-loop transportation system may be facilitated without the need for a (cost-intensive) physical implementation of a respective closed-loop transportation system.

According to a further embodiment, the at least one algorithmic procedure of the calculating unit may further be configured to generate a parameter space of potential combinations of the received number N of status signals, based at least in part on the received threshold signal. The simulation may be performed based at least in part on the generated parameter space.

As outlined above, the number N of status signals may comprise one or more parameters that are associated with an operation mode of the closed-loop transportation system. As also outlined above, said number N of status signals may not exclusively be related to a single value of the respective parameter that is indicative of an operation mode of the closed-loop transportation system but may instead refer to an interval (e.g., based on a received threshold signal) within which a respective value of the number N of status signals may vary. Based on the allowed variation of respective values of the number N of status signals, the parameter space of combinations may be determined. The determination may be based on permutating the respective values of the number N of status signals relative to each other such that each possible combination of the values of the number N of status signals is obtained.

Based at least in part thereon, a protocol may be provided comprising potential combinations of the values of the number N of status signal that shall undergo further characterization.

According to a further embodiment, the at least one algorithmic procedure may be configured to simulate the operation of the closed-loop transportation system for each of the combinations in the parameter space.

That is, the algorithmic procedure may be configured to determine the at least one (optimized) output signal based at least in part on each combination in the parameter space. This may comprise determining a maximum achievable throughout in the closed-loop transportation system for each of the combinations in the parameter space.

In some examples, the parameter space may comprise > 10, > 15, > 20, > 50, > 75, > 100, > 150 or even more than 200 entries wherein for each of the entries, a maximum throughput may be determined based on which the at least one output signal may be derived.

As a result, a detailed and systematic characterization of the closed-loop transportation system may be provided.

According to a further embodiment, the algorithmic procedure may be configured to stop the simulation prior to simulating the operation of the closed-loop transportation system for each of the combinations in the parameter space if it is determined, based at least in part on at least one predefined condition, that a respective combination in the parameter space is unsuitable for operating the closed-loop transportation system.

The at least one predefined condition may be referred to as a potential combination of the parameter space that may be seen as not suitable for being applied to a real-world closed-loop transportation system, e.g., as the implementation of such a combination may be seen as economically not advantageous (e.g., as it may be too cost-intensive). Additionally or alternatively, the algorithmic procedure may be configured to stop if it is determined that the simulation of further combinations of the number N of status signals does not lead to a further improvement of the maximum throughput of carriers in the closed-loop transportation system. That is, if it is for example determined that a further increase of the number of carriers in the closed-loop transportation system, *ceteris paribus,* does not lead to a further increase of the throughput of the closed-loop transportation system, entries of the parameter space that are related to a further increase of the number of carriers in the closed-loop transportation system may not be regarded any further.

By means of aborting the simulation of the entries of the parameter space early, computation time may be saved and a determination of the at least one output signal may be performed earlier.

According to a further embodiment, the at least one algorithmic procedure may be configured to determine the at least one output signal such that it maximizes a carrier throughput in the closed-loop transportation system. The determining may comprise selecting the at least one output signal from the parameter space and/or the at least one output signal may be determined based at least in part on a weighting of combinations in the parameter space.

Additionally or alternatively, the at least one output signal may be determined based at least in part on an interpolation of combinations of the parameter space. This may be understood as a determination, by the algorithmic procedure, that an increase of the M-1-th value of one of the number N of status signals to an M-th value of one of the number N of status signals leads to an increase of the expected throughout whereas a further increase to an M+1-th value of the one of the number N of status signals leads to a decrease of the expected throughout. That is, the algorithmic procedure may assume that the expected throughout may potentially be maximized for a value of the respective one of the number N of status signals that lies in between the M-th and the M+1-th value. The algorithmic procedure may in some cases be configured to determine a value in between the M-th and the M+1-th value such that the value of the respective one of the number N of status signals may be estimated that may maximize the throughput of the closed-loop-transportation system.

Based thereon, a more versatile prediction of the aspect which values of the number N of status signals may lead to an optimization of the throughput may be provided.

Any embodiment of the first aspect may be combined with any embodiment of the first aspect to obtain another embodiment of the first aspect.

According to a second aspect, a system is suggested. The system comprises a closed-loop transportation system that comprises a linear transport system with a first end and a second end and a belt system arranged to form a closed-loop between the first end and the second end of the linear transport system. The system may further comprise a computer-implemented device for controlling the belt system according to one of the aforementioned aspects.

In some examples, the closed-loop transportation system and the computer-implemented device may be provided as a single device. Alternatively, the closed-loop transportation system and the computer-implemented device may be provided as two separate devices. In an example, the computer-implemented device may be provided as a remote device, e.g., operated as a cloud-based device (e.g., a server).

According to a third aspect, a computer-implemented method for optimizing a closed-loop transportation system is suggested. The closed-loop transportation system may comprise a linear transport system with a first end and a second end and a belt system arranged to form a closed-loop between the first end and the second end of the linear transport system. The computer-implemented method may comprise receiving a number N, with N ≥ 1, of status signals indicative of a potential operation state of the closed-loop transportation system and calculating, using at least one algorithmic procedure, said at least one algorithmic procedure being configured to provide at least one output signal for optimizing the closed-loop transportation system using the number N of status signals as input. Moreover, the computer-implemented method may comprise controlling the closed-loop transportation system using the provided at least one output signal.

In some embodiments, the linear transportation system may be provided as a Multi-Carrier-System MCS^{®}.

According to a fourth aspect, a computer program product is suggested that comprises a program code for executing the computer-implemented method according to one of the aforementioned aspects when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the device of the present invention apply, *mutatis mutandis*, to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
Fig. 1 depicts an illustration of an exemplary closed-loop transportation system;
Figs. 2A-2D show exemplary characterizations of an embodiment of a closed-loop transportation system;
Fig. 3 shows a schematic block diagram of an embodiment of a system of a computer-implemented device; and
Fig. 4 shows a schematic flowchart of an embodiment of a computer-implemented method.

In the Figures, reference numerals designate like or functionally equivalent elements, unless otherwise indicated.

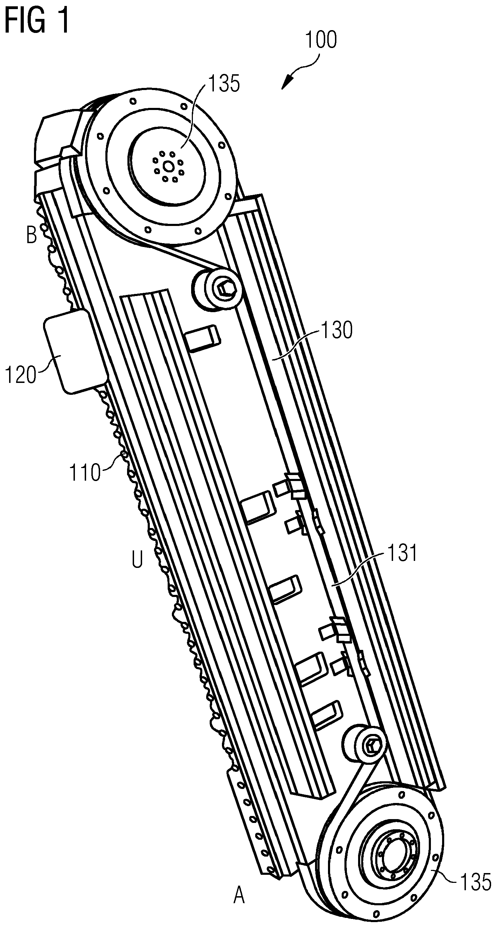

Fig. 1 shows an exemplary closed-loop transportation systems 100 according to aspects of the present invention.

The closed-loop transportation system 100 comprises a linear transport system 110. The linear transport system 110 may be provided as a linear motor as described above. The linear transport system 110 may comprise at least one carrier 120 that is movable along a longitudinal direction of the linear transport system 110 and on an upper side U of the linear transport system 110.

The linear transport system 110 may comprise a first end A end a second B. The at least one carrier 120 may be movable between the first end A and the second end B.

The at least one carrier 120 may move along the linear transport system 110 in a stop-and-go manner as described above such that required processing steps may be carried out on a product placed on the at least one carrier 120 at respective process positions that may be deployed along the longitudinal direction of the linear transport system 110.

The closed-loop transportation system 100 may further comprise a belt system 130.

As soon as the at least one carrier 120 arrives at the second end B, the at least one carrier 120 may be passed over to the belt system 130.

The belt system 130 may comprise a (toothed) belt 131 which is wound about two rollers 135 (one of the rollers 135 may be arranged in vicinity to the first end A of the linear transport system 110 whereas the second one of the rollers 135 may be arranged in vicinity to the second end B of the linear transport system 110).

At least one of the rollers 135 may be operationally connected to a motor (not shown in Fig. 1) that may be configured to rotate at least one of the rollers 135 at a certain angular speed. The rollers 135 may be teethed along the circumferential direction such that the teeth of the belt 131 may operably connect with the rollers 135 such that the belt 131 may be set into motion at least in part by means of one of the rollers 135.

The belt 131 may be configured to form a closed-loop about the rollers 135.

A carrier 120 at the second end B may be provided with fixations means such that the carrier 120 may be connected to the belt 131 of the belt system 130. The carrier 120 to be passed over to the belt 131 may be connected to one of the teeth of the belt 131 and may thus be moved from the second end B of the linear transport system 110 to the first end A of the linear transport system 110 by means of the belt system 130 such that a closed-loop transportation system 100, 320 is formed in which carriers 120 may move in a closed loop.

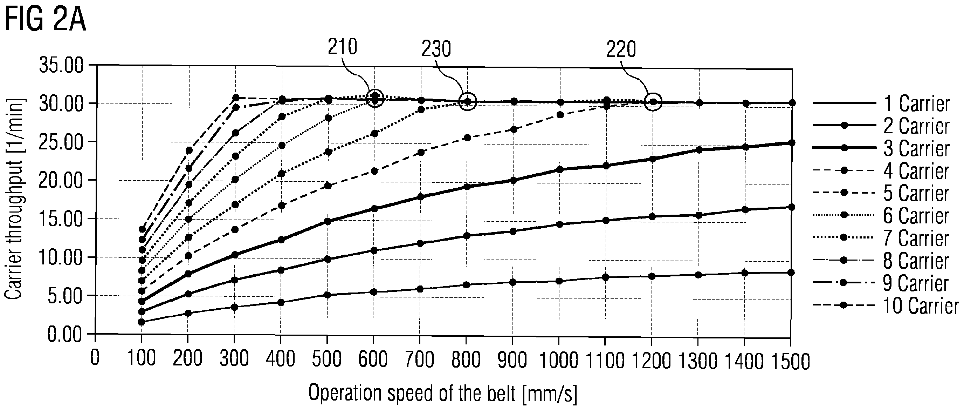

Figs. 2A-2D show exemplary results of a characterization (based on a simulation) of the throughput of a closed-loop transportation system (e.g., the closed-loop transportation system 100, 320 as described with reference to Fig. 1, above) in dependence on combinations of an operation speed of the belt 131 (e.g., of the belt system 130) and a number of carriers (e.g., carriers 120) which may be permutated relative to each other to form a respective parameter space.

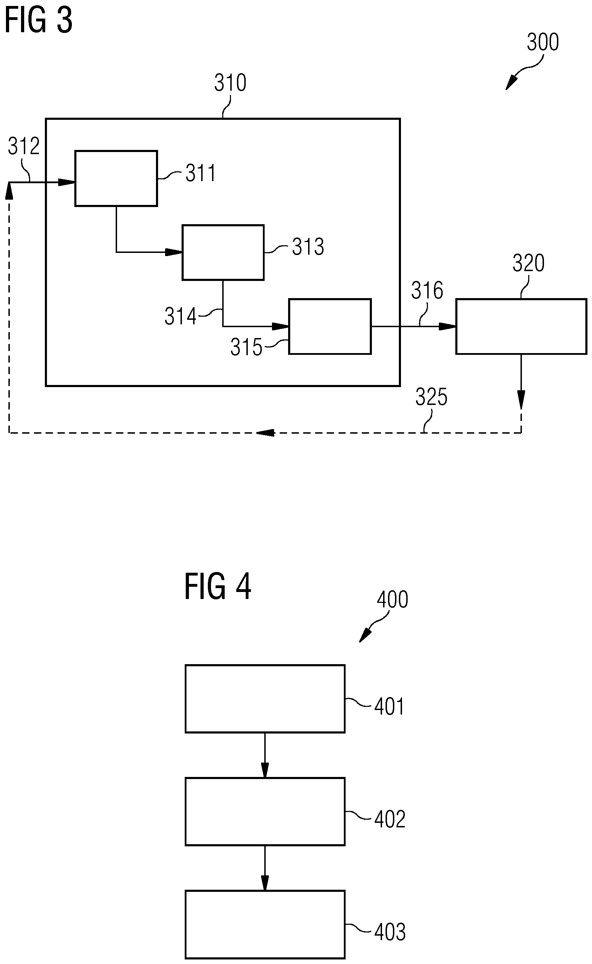

For each of the combinations of the parameter space, the calculating unit (e.g., the calculating unit 313 which will further be described with reference to Fig. 3, below, and in particular the algorithmic procedure operated thereon) may determine a carrier 120 throughput.

Fig. 2A exemplarily shows a simulation of the throughput of carriers 120 per minute in the closed-loop transportation system (e.g., the closed-loop transportation system 100 and as measured at the second end B) vs. a variation of the operation speed of the belt 131 in mm/s (e.g., between 100 mm/s and 1500 mm/s) and respective different numbers of carriers 120 (e.g., for 1 to 10 carriers).

As depicted in Fig. 2A, the operation speed of the belt 131 has been varied in increments of 100 mm/s for each of the 10 possible numbers of carriers in the closed-loop transportation system 100, 320 such that 15 different operation speeds of the belt 131 were characterized for each possible number of carriers 120 in the closed-loop transportation system 100. That is, the simulation shown in Fig. 2A depends on 150 simulation runs.

As can be derived from Fig. 2A, for each number of carriers 120, an increase of the operation speed of the belt 131 from 300 mm/s to 1100 mm/s leads to an increase of the throughput of carriers 120 in the closed-loop transportation system 100, a maximum throughput is obtained for approx. 300 mm/s followed by a steady decrease of the maximum achievable throughput for a further increase of the operation speed of the belt 131.

As can also be derived from Fig. 2A, an increase of the number of carriers 120 in the closed-loop transportation system 100 leads to an increase of the maximum throughput for operation speeds of the belt 131 of less than approx. 300 mm/s. However, if the operation speed of the belt 131 is increased to, e.g., 800 mm/s, an increase of the number of carriers 120 from, e.g., 4 to 5, in the closed-loop transportation system 100 may increase the throughput of carriers 120. However, a further increase of the number of carriers 120 in the closed-loop transportation system 100 (e.g., from 5 to 6 or more), does not lead to a further increase of the throughput of carriers 120 in the closed-loop transportation system 100.

As a result, it may be derivable that if, e.g., 6 carriers 120 are to be used in the closed-loop transportation system 100 (e.g., to meet certain production needs), there is no beneficial effect if the operation speed of the belt 131 is increased beyond approx. 800 mm/s. A further increase of the operation speed of the belt 131 beyond 800 mm/s may then only lead to higher energy consumption (and thus costs) of the closed-loop transportation system 100 but may not contribute to a further increase of the carrier 120 throughput anymore. This may tell an operator of the closed-loop transportation system 100 that the operation speed of the belt 131 may at most be set to approx. 800 mm/s if, e.g., 6 carriers are to be used in the closed-loop transportation system 100.

It is further derivable from Fig. 2A that the maximum throughput is achieved for 10 carriers 120 and an operation speed of the belt 131 of 300 mm/s. That is, if the algorithmic procedure is configured to generally optimize the throughput of carriers 120, the calculating unit 313 may provide the at least one output signal 314 such that the at least one output signal 314 is indicative of a number of 10 carriers 120 and an operation speed of the belt 131 of 300 mm/s as this combination leads to highest achievable throughput.

What can further be derived from Fig. 2A is the aspect that a carrier 120 may at least in part be substituted by an increase of the operation speed of the belt 131. This may in particular be beneficial if a higher power consumption of the belt system 130 is acceptable in case the number of required carriers 120, to achieve a certain throughput, may be reduced to safe the implementation costs for a respective carrier 120. If for example, and with a view to Fig. 2A, the number of carriers 120 in the closed-loop transportation system 100 is to be reduced by two carriers 120 (e.g., from 10 carriers to 8), an exemplary increase of the operation speed of the belt 131 from 200 mm/s to 300 mm/s may lead to a throughput that is at least as pronounced as the throughput for initially 10 carriers and an operation speed of the belt 131 of 200 mm/s.

The criterion whether the number of carriers 120 shall at least in part be substituted by an increase of the operation speed of the belt 131 may depend on a weighting of the number of carriers 120 and the operation speed of the belt 131. Said weighting may, e.g., rank the operation speed of the belt 131 with a higher priority as compared to the number of carriers 120 such that a higher operation speed of the belt 131 may, e.g., be avoided as compared to a higher number of carriers 120 (and vice versa).

In an example, based on the characterization as shown in Fig. 2A, it may be derived that the overall maximum throughout may be achieved if the operation speed of the belt 131 is set to 600 mm/s and for a total of 6 carriers 120 in the closed-loop transportation system 100 (indicated by marker 210). However, it may also be determined that almost a similar throughput may be achieved for 4 carriers 120 in the closed-loop transportation system 100 but for an operation speed of the belt 131 of 1200 mm/s (indicated by marker 220). A weighting of the operation speed of the belt 131 and the number of carriers 120 in the system may suggest a compromise between the global achievable maximum throughput (marker 210) and the almost identical maximum occurring for a higher operation speed of the belt 131 (marker 220) such that an operation speed of the belt 131 of 800 mm/s may be suggested for a total of 5 carriers 120 (marker 230) as the ideal at least one output signal 314. Therefore, a balance between cost-intensive carriers 120 and undue energy consumption may be derived.

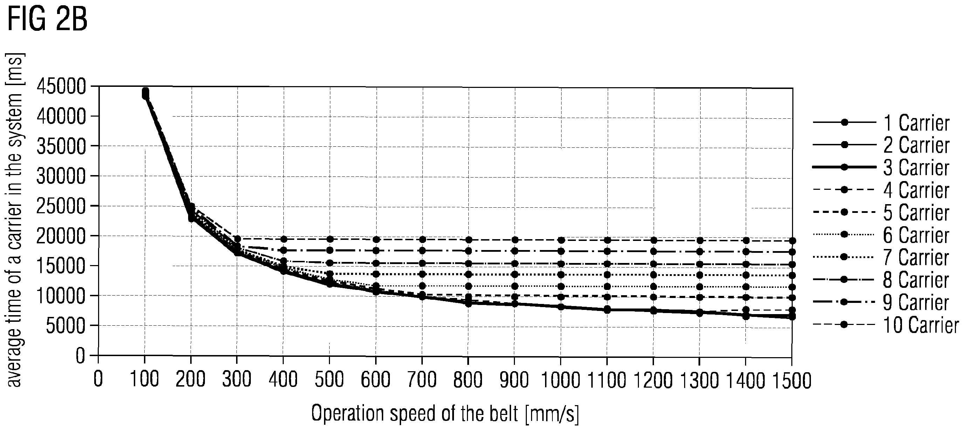

Fig. 2B shows a simulation of a closed-loop transportation system 100 (in analogy to the simulation of Fig. 2A) in which the average time of a carrier 120 in the closed-loop transportation system 100 (in ms) has been simulated by means of the calculating unit 313 and the algorithmic procedure vs. various combinations of the operation speed of the belt 131 (in mm/s) and the number of carriers 120 in the system. The average time of a carrier 120 in the system may, e.g., be referred to as the average time of a carrier 120 for a full revolution through the closed-loop transportation system 100. That is, the average time of a carrier 120 in the closed-loop transportation system 100 may be seen as being proportional to the throughput of carriers 120 in the closed-loop transportation system 100 per given time interval.

The parameters for which the characterization of the average time of a carrier in the system has been performed, are identical to the number of carriers 120 and operation speeds of the belt 131 (as well as their respective increments) as outlined with respect to Fig. 2A, above.

As can be derived from Fig. 2B, the average time of a carrier 120 on the belt 131 of the belt system 130 for an increase of the operation speed of the belt 131 and the number of carriers 120 in the closed-loop transportation system 100 up to an operation speed of the belt 131 of approx. 300 mm/s.

A further increase of the operation speed of the belt 131 only leads to a further decrease of the average time of a carrier 120 in the system for a total of less than 8 carriers 120 in the system.

In case, e.g., a total number of 10 carriers 120 is used in the closed-loop transportation system 100, the average time of a carrier 120 in the closed-loop transportation system 100 acquires its minimum for an operation speed of the belt 131 of approx. 300 mm/s. A further increase of the operation speed of the belt 131 does not lead to a further decrease of the average time of a carrier in the closed-loop transportation system 100 anymore.

A similar saturation behavior is derivable from Fig. 2B for smaller number of carriers 120. For a smaller number of carriers 120 (e.g., less than 10), the saturation behavior tends to set in for larger operation speeds of the belt 131 as compared to a total number of 10 carriers 120 in the system.

As a result, the calculating unit 313, and the algorithmic procedure operated thereon, may derive the information that for a certain number of a carriers 120 in the system, a further increase of the operation speed of the belt 131 may only lead to a higher energy consumption and attrition but may not support a higher throughout of carriers 120 in the system. The controlling unit 312 may, under these circumstances, preferably abstain from suggesting the at least one output signal 314 such that setting the closed-loop transportation system 100 to said at least one output signal 314 may lead to a throughput of the closed-loop transportation system 100 that may be associated with said saturation region as a more cost-efficient configuration of the closed-loop transportation system 100 may exist.

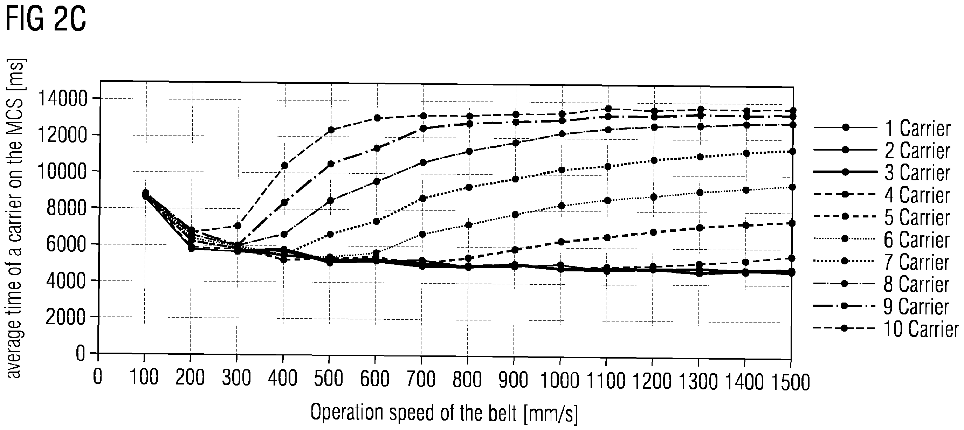

Fig. 2C depicts an exemplary characterization of an average time of a carrier 120 on the linear transport system 110 for different combinations of the operation speed of the belt 131 and the number of carriers 120 in the closed-loop transportation system 100.

The parameters for which the characterization of Fig. 2C has been performed are identical to the number of carries 120 and the operation speeds of the belt 131 (as well as their respective increments) as outlined with respect to Figs. 2A and 2B, above.

As derivable from Fig. 2C, the average time of a carrier 120 on the linear transport system 110 is longer for a larger number of carriers 120 in the closed-loop transportation system 100. This may at least in part be explained based on the aspect that a larger number of carriers 120 in the closed-loop transportation system 100 may lead to congestion effects at the second end B of the linear transport system 110 at which one or more carriers 120 may be required to wait for some time until they can be handed over to the belt 131 of the belt system 130.

As derivable from Fig. 2C, the average time of a carrier 120 on the linear transport system 110 may decrease for an increase of the operation speed of the belt 131 from 100 mm/s to 300 mm/s for most numbers of carriers 120 in the closed-loop transportation system 100 and may then increase for a further increase of the operation speed of the belt 131.

For each number of carriers 120 in the closed-loop transportation system 100, a further increase of the operation speed of the belt 131 may lead to a longer average time of a carrier 120 on the linear transport system 110 but may then exhibit a saturation behavior.

The general trend that a higher operation speed of the belt 131 tends to cause a higher dwell time of the carriers 120 on the linear transport system 110 may be explained by the aspect that carriers 120 passed over from the linear transport system 110 to the belt system 130 may be returned faster the higher the operation speed of the belt 131 is set. Since the speed of the carriers 120 on the linear transport system 110 remains unchanged, an increase of the operation speed of the belt 131 may lead to congestion effects on the linear transport system 110 thus causing a prolonged dwell time of the carriers 120 on the linear transport system 110.

Based at least in part on said characterization, the calculating unit 313, and the algorithmic procedure, may tend to abstain from suggesting a combination of, e.g., the operation speed of the belt 131 and the number of carriers 120 in the closed-loop transportation system 100 that may likely lead to an average time of a carrier 120 on the linear transport system 110 in a region in which the average time saturates as the same average time may likely be achieved in a more cost-efficient manner (e.g., by means of a reduced operation speed of the belt 131).

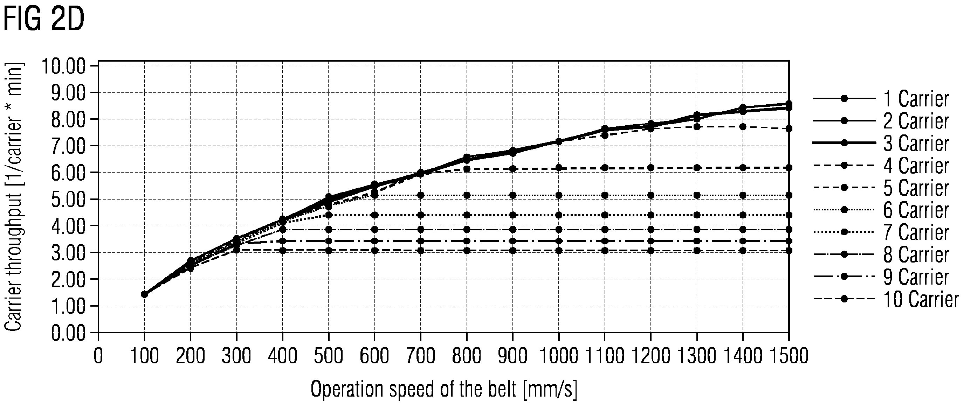

Fig. 2D shows an exemplary characterization of the carrier throughput per carrier 120 and per minute (i.e., the number of full revolutions of a single carrier 120 through the closed-loop transportation system 100, 320 per minute). The exemplary characterization was performed for different combinations of the operation speed of the belt 131 (in mm/s) and number of carriers 120 in the closed-loop transportation system 100.

The parameters for which the characterization of Fig. 2D has been performed are identical to the number of carries 120 and operation speeds of the belt 131 (as well as their respective increments) as outlined with respect to Figs. 2A, 2B and 2C, above.

As derivable from Fig. 2D, the number of times a carrier 120 undergoes a full revolution in the closed-loop transportation system 100 per minute increases (independent of the number of carriers 100 in the system) for an increase of the operation speed of the belt 131 from, e.g., 100 mm/s to 300 mm/s. For higher operation speeds of the belt 131 (leaving the number of carriers 120 unchanged), the number of times a carrier 120 undergoes a full revolution in the closed-loop transportation system 100 per minute does not increase any further and instead exhibits a saturation behavior. The operation speed of the belt 131 at which the saturation behavior is exhibited increases with a decrease of the number of carriers 120 in the closed-loop transportation system 100, 320.

Based at least in part thereon, the calculating unit 313, and the algorithmic procedure executed thereon, may prefer abstaining from suggesting a combination of the operation speed of the belt 131 and the number of carriers 120 that may lie in the saturation zone, as, as outlined above, a same throughput may be achieved with a more efficient combination of the operation speed of the belt 131 and the number of carriers 120 in the closed-loop transportation system 100.

As a general remark, when determining a combination of, e.g., the operation speed of the belt 131 and the number of carriers 120 in the closed-loop transportation system 100, the calculating unit 313 may select a combination which has been comprised in the simulated parameter space (e.g., a total number of 10 carriers in the closed-loop transportation system 100 and an operation speed of the belt 131 of 300 mm/s) as the at least one output signal 314. Alternatively, it may also be possible that the calculating unit 313 performs an interpolation within defined boundary conditions. In such a case, the calculating unit 313 may suggest an interpolated value that may be part of the combination that is provided as the at least one output signal 314. The interpolated value may, e.g., lie in between two subsequent values of, e.g., the operation speed of the belt 131 such as, e.g., 330 mm/s if it is assumed, by the calculating unit 313, that such a value of the operation speed of the belt 131 may lead to a further increase of the carrier 120 throughput in the closed-loop transportation system 100, based at least in part on the knowledge on the throughput for an operation speed of the belt 131 of 200 mm/s and 400 mm/s. The boundary conditions may further require that the total number of carriers 120 may not be interpolated as only integer numbers of carriers 120 in the closed-loop transportation system 100 may be seen as physically useful.

It will be apparent for the person skilled in the art that the aforementioned quantitative values are for explanatory purposes only and for the sake of understanding the invention and that other quantitative values/and combinations may equally be within the scope of the present invention.

Fig. 3 shows a schematic block diagram of a system 300 according to aspects of the present invention.

The system 300 comprises a computer-implemented device 310 that may be configured to execute the method as outlined above and a closed-loop transportation system 320 (which may be identical to the closed-loop transportation system 100 as described with reference to Fig. 1, above) which may at least in part be controlled by the computer-implemented device 310.

The computer-implemented device 310 may comprise a receiving unit 311 that may be configured to receive a number N of status signals 312 indicative of an operation state of the closed-loop transportation system 320.

The computer-implemented device 310 may further comprise a calculating unit 313 using at least one algorithmic procedure.

The calculating unit 313 may provide at least one output signal 314.

The at least one output signal 314 may be provided to a controlling unit 315 that may also be comprised by the computer-implemented device 310.

The controlling unit 315 may use the at least one output signal 314 and may set the closed-loop transportation system 320 to an operating state, by means of signal 316, that is indicated by the at least one output signal 314.

The closed-loop transportation system 320 may generate a new number N of status signals 325 that may again be passed to the receiving unit 311.

The features of the computer-implemented device 310 may at least in part be accessible by an operator by means of a web interface. At least a portion of the computer-implemented device 310 may be provided as a cloud-based service.

Fig. 4 shows an exemplary flowchart of a computer-implemented method 400 for controlling a closed-loop transportation system 100, 320. Examples of such a closed-loop transportation system 100, 320 are discussed with reference to Figs. 1 and 3.

The computer-implemented method 400 of Fig. 4 includes method steps 401-403:
In step 401, a number N, with N ≥ 1, of status signals 312, 325 indicative of a potential operation state of the closed-loop transportation system is received.

In step 402, at least one output signal 314 for optimizing the closed-loop transportation system using the number N of status signals 312, 325 as input is provided by calculating, using at least one algorithmic procedure.

In step 403, the closed-loop transportation system 100, 320 is controlled using the provided at least one output signal 314.

Although the present invention has been described in accordance with preferred embodiments, it is obvious for the person skilled in the art that modifications are possible in all embodiments.

### List of Reference

- A: first end
- B: second end
- U: upper side
- 100: closed-loop transportation system
- 110: linear transport system
- 120: carrier
- 130: belt system
- 131: belt
- 135: roller
- 210: marker
- 220: marker
- 230: marker
- 300: system
- 310: computer-implemented device
- 311: receiving unit
- 312: number N of status signals
- 313: calculating unit
- 314: at least one output signal
- 315: controlling unit
- 316: signal
- 320: closed-loop transportation system
- 325: number N of status signals
- 400: computer-implemented method
- 401: method step
- 402: method step
- 403: method step

## Claims

1. A computer-implemented device (310) for optimizing a closed-loop transportation system (100, 320), the closed-loop transportation system (100, 320) comprising:
a linear transport system, (110) including a first end (A) and a second end (B); and
a belt system (130) arranged to form a closed-loop between the first end (A) and the second end (B) of the linear transport system (110);
the computer-implemented device (310) comprising:
a receiving unit (311) for receiving a number N, with N ≥ 1, of status signals (312, 325) indicative of an operation state of the closed-loop transportation system (100, 320);
a calculating unit (313) using at least one algorithmic procedure, said at least one algorithmic procedure being configured to provide at least one output signal (314) for optimizing the closed-loop transportation system (100, 320) using the number N of status signals (312, 325) as input; and
a controlling unit (315) for controlling the closed-loop transportation system (100, 320) using the provided at least one output signal (314).

2. The device of claim 1,
wherein the linear transport system (110) further comprises a number of carriers (120) movable between the first end (A) and the second end (B) of the linear transport system (110); and wherein the belt system (130) is further configured to receive at least one carrier (120) from the linear transport system (110) at the second end (B) and to return the at least one carrier (120) to the linear transport system (110) at the first end (A).

3. The device of claim 2,
wherein the receiving unit (311) is configured to receive the number N of status signals (312) including:
- a number of carriers (120) in the closed-loop transportation system (100, 320),
- an operation speed of the belt system (130) of the closed-loop transportation system (100, 320),
- a throughput of carriers (120) in the closed-loop transportation system (100, 320), and/or
- a processing time of a carrier (120) at a certain process position on the linear transport system (110).

4. The device of one of claims 1 to 3,
wherein the receiving unit (311) is further configured to receive at least one threshold signal indicative of an interval within which the at least one output signal (314) is allowed to vary.

5. The device of one of claims 1 to 4,
wherein the number of N status signals (312, 325) represents a number K, with K ≤ N, of hypothetic status signals of the closed-loop transportation system (100, 320) and a number L, with L = N-K, of current real world status signals of the closed-loop transportation system (100, 320).

6. The device of one of claims 2 to 5,
wherein the at least one output signal (314) provided by the algorithmic procedure is indicative of an optimized operation speed of the belt system (130) and/or an optimized number of carriers (120) to be used in the closed-loop transportation system (100, 320).

7. The device of claim 6,
wherein the at least one output signal (314) includes an optimized operation speed of the belt system (130); and
wherein the controlling unit (315) is configured to set the operation speed of the belt system (130) to the optimized operation speed; and/or
wherein the controlling unit (315) is configured to provide an operator of the closed-loop transportation system (100, 320) with the at least one output signal (314) for a manual control of the closed-loop transportation system (100, 320) based on the at least one output signal (320).

8. The device of one of claims 2 to 7,
wherein the at least one algorithmic procedure is configured to determine a carrier (120) throughput in the closed-loop transportation system (100, 320) as part of a simulation of the operation of the closed-loop transportation system (100, 320) that is operated based on the number N of status signals (312).

9. The device of claims 4 and 8,
wherein the at least one algorithmic procedure of the calculating unit (313) is further configured to generate a parameter space of potential combinations of the received number N of status signals (312, 325), based at least in part on the received threshold signal; and
wherein the simulation is performed based at least in part on the generated parameter space.

10. The device of claim 9,
wherein the at least one algorithmic procedure is configured to simulate the operation of the closed-loop transportation system (100, 320) for each of the combinations in the parameter space.

11. The device of one of claims 9 or 10,
wherein the algorithmic procedure is configured to stop the simulation prior to simulating the operation of the closed-loop transportation system (100, 320) for each of the combinations in the parameter space if it is determined, based at least in part on at least one predefined condition, that a respective combination in the parameter space is unsuitable for operating the closed-loop transportation system (100, 320).

12. The device of one of claims 9 to 11,
wherein the at least one algorithmic procedure is configured to determine the at least one output signal (314) such that it maximizes a carrier throughput in the closed-loop transportation system (100, 320); and
wherein the determining comprises selecting the at least one output signal (314) from the parameter space and/or wherein the at least one output signal (314) is determined based at least in part on a weighting of combinations in the parameter space.

13. A system comprising:
a closed-loop transportation system (100, 320) comprising:
a linear transport system, (110) with a first end (A) and a second end (B);
a belt system (130) arranged to form a closed-loop between the first end (A) and the second end (B) of the linear transport system (110); and
a computer-implemented device (310) for optimizing the belt system (130) according to one of claims 1 to 12.

14. A computer-implemented method (400) for optimizing a closed-loop transportation system (100, 320), the closed-loop transportation system (100, 320) comprising:
a linear transport system, (110) with a first end (A) and a second end (B);
a belt system (130) arranged to form a closed-loop between the first end (A) and the second end (B) of the linear transport system (110);
the computer-implemented method comprising:
receiving (401) a number N, with N ≥ 1, of status signals (312, 325) indicative of a potential operation state of the closed-loop transportation system (100, 320);
calculating (402), using at least one algorithmic procedure, said at least one algorithmic procedure being configured to provide at least one output signal (314, 325) for optimizing the closed-loop transportation system (100, 320) using the number N of status signals (312) as input; and
controlling (403) the closed-loop transportation system (100, 320) using the provided at least one output signal (314).

15. A computer program product comprising a program code for executing the computer-implemented method according to claim 14 when run on at least one computer.
